# EUROPÄISCHE PATENTANMELDUNG

(11) **EP 0 971 322 A2**
(43) Veröffentlichungstag der Anmeldung: **12.01.2000**
(21) Anmeldenummer: 99111550.2
(22) Anmeldetag: 15.06.1999
(51) Int. Cl.: G07C 7/00

(54) **Fahrtschreiber mit einem quaderförmigen Einbaugehäuse und mit einer Druckvorrichtung**

(30) Priorität: 09.07.1998 DE 29812216 U
(71) Anmelder: Mannesmann VDO Aktiengesellschaft, 60388 Frankfurt am Main (DE)
(72) Erfinder: Hügle, Axel Dipl.-Ing. (FH), 78120 Furtwangen (DE); Burkart, Harald Dipl.-Ing. (FH), 78054 Villingen-Schwenningen (DE)

(57) **Zusammenfassung**

Es wird vorgeschlagen bei einem Fahrtschreiber mit einer Druckvorrichtung die entsprechende Druckerbaugruppe (13) zum Wechseln des Druckträger-Bandwickels verschiebbar in dem betreffenden Fahrtschreiber zu lagern. Hierfür ist ein Schlitten (25), welcher eine wannenförmige Aufnahme (27) für den Bandwickel umfaßt, vorgesehen. Zur Verbesserung des Zugangs zu der Aufnahme (27) in ungünstigen Einbaulagen des Fahrtschreibers ist die Fronteinheit (26) der Druckerbaugruppe (13), bestehend aus einem Element (12) der Frontwand des Fahrtschreibers, dem Druckwerk (21) und einer Lagerbrücke (22) gelenkig mit dem Schlitten (25) verbunden.

## Beschreibung

Die Erfindung betrifft einen Fahrtschreiber mit einem quaderförmigen Einbaugehäuse und mit einer Druckvorrichtung, in welcher ein bandförmiger Aufzeichnungsträger Anwendung findet, wobei zum Zwecke des Wechselns des Druckträger-Bandwickels eine im wesentlichen aus einem Element der Frontwand des Fahrtschreibers, einem Druckwerk und einer Aufnahme für den Bandwickel bestehende, verschiebbar gelagerte Druckerbaugruppe vorgesehen ist, welche aus dem Fahrtschreiber frontseitig wenigstens teilweise herausfahrbar ist.

Bei einem derartigen Gerätekonzept ist die Tachometerfunktion der bisher üblichen Fahrtschreiber von der Registrierfunktion getrennt, so daß das Registriergerät in einer Fahrzeugkabine innerhalb des möglichen Handhabungsbereichs des Fahrers angeordnet werden kann, während das die Tachometerfunktion übernehmende Anzeigegerät, vorzugsweise ein Zeigerinstrument, im Armaturenbrett, das heißt im unmittelbaren Sichtbereich des Fahrers verbleibt und über eine geeignete elektrische Verbindung mit dem Registriergerät gekoppelt ist.
Die, was das Registriergerät anbelangt, freiere Wahl des Einbauortes schafft jedoch in bestimmten Fällen, beispielsweise bei einem Einbau im Dachunterbau des Fahrzeuges oder in oder neben einer Mittelkonsole, erhebliche Unbequemlichkeiten beim Wechseln des Druckträgers beziehungsweise beim Entnehmen eines abgespulten Wickelkerns und Einlegen eines neuen Bandwickels sowie beim Einfädeln des Bandanfangs in die Transportmittel des Druckers.

Die Aufgabe der vorliegenden Erfindung bestand somit darin, den gattungsgemäßen Fahrtschreiber derart zu gestalten, daß die Handhabung beim Wechseln des Druckträgers in möglichst allen Einbausituationen zufriedenstellend ist und die getroffene Gestaltung eine seriengerechte Herstellung mit geringem Bauteileaufwand gestattet.

Die Lösung der Aufgabe beschreibt der Schutzanspruch 1. Weitere vorteilhafte Ausgestaltungen der Erfindung gehen aus den Unteransprüchen hervor.

Mit der Möglichkeit des Verschwenkens der Fronteinheit ergibt sich dadurch, daß der Bandwickel aus verschiedenen Richtungen, insbesondere jedoch von der Frontseite aus, in die Bandwickel-Aufnahme einlegbar und auch der Einfädelspalt des Druckwerkes leichter zugänglich ist, bei einer Vielzahl von Einbaulagen des Fahrtschreibers eine erheblich verbesserte Handhabung beim Wechseln des Bandwickels. Vorteilhaft ist ferner, daß die aus der Lagerbrücke, dem Druckwerk und dem Frontwandelement gebildete Fronteinheit mit dem im wesentlichen die Aufnahme und die Führungswangen umfassenden Schlitten lediglich durch Zusammenstecken funktionsfertig verbunden werden kann. Außerdem ist hervorzuheben, daß bei entsprechender maßlicher Abstimmung zwischen den Schenkeln der Lagerbrücke und den Seitenwänden der Aufnahme eine friktionelle Verbindung geschaffen werden kann, die beim Verschwenken der Fronteinheit eine Bremsfunktion bewirkt.

Im folgenden sei die Erfindung anhand der beigefügten Zeichnungen näher erläutert. Es zeigen:
- Figur 1: eine Frontansicht eines gattungsgemäßen Fahrtschreibers,
- Figur 2: eine Seitenansicht der Druckerbaugruppe des Fahrtschreibers gemäß Figur 1 mit verschwenkter Fronteinheit,
- Figur 3: eine Explosionsdarstellung mit einer Seitenansicht des Bandwickels und mit teilweise geschnittenen Seitenansichten der Fronteinheit und des Schlittens,
- Figur 4: eine Perspektivdarstellung der Druckerbaugruppe mit verschwenkter Fronteinheit.

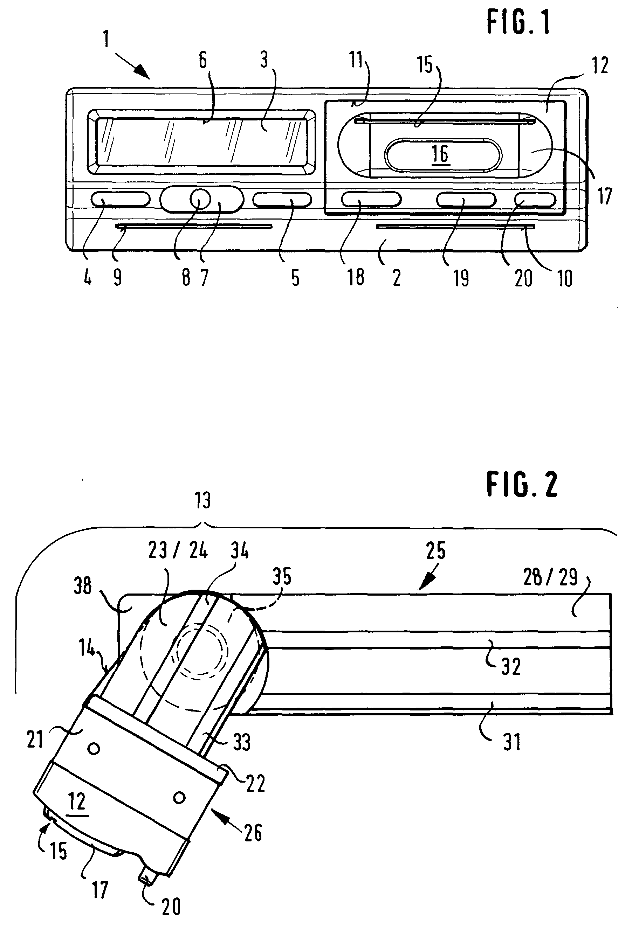

Der in Figur 1 dargestellte Fahrtschreiber 1 weist eine mit dem nicht sichtbaren, quaderförmigen Einbaugehäuse verbundene Blende beziehungsweise Frontwand 2 auf, in welcher ein Display 3 gehaltert ist sowie Tasten 4 und 5 angeordnet sind. Mit 6 ist ein dem Display 3 zugeordneter Fensterausschnitt bezeichnet; eine Abdeckung 7, welcher eine Plombe 8 zugeordnet ist, verschließt eine für Diagnose- und Parametrierzwecke vorgesehene Steckerfassung. Schlitze 9 und 10 dienen dem Eingeben von den Fahrern zugeordneten Datenkarten. In der Frontwand 2 ist eine Aussparung 11 vorgesehen, welche von einer im folgenden als Frontwandelement 12 bezeichneten Blende abgedeckt ist, die sich gestalterisch in die Frontfläche der Frontwand 2 einfügt. Das Frontwandelement 12 ist Teil einer in dem Fahrtschreiber 1 verschiebbar gelagerten Druckerbaugruppe 13 und ist demzufolge mit einem für den Durchtritt eines Druckträgers 14 bestimmten Schlitz 15 versehen. Der Druckerbaugruppe ist ein der Einfachheit halber nicht dargestelltes Rastgesperre beziehungsweise ein bistabiles Rastgetriebe zugeordnet, das durch Betätigen des Frontwandelementes 12, das somit als Taste dient, ent- und verriegelt werden kann. Ein an dem Frontwandelement 12 ausgebildeter, mit einer speziellen Grifffläche 1 6 versehener Wulst 17 dient dabei der taktilen Führung. Außerdem sind in dem Frontwandelement 12 mehrere Tasten 18, 19 und 20 des Fahrtschreibers 1 gelagert, die zusammen mit den Tasten 4 und 5 dem Anwählen der wichtigsten Arbeitszeitdaten der Fahrer, dem Vorwärts- und Rückwärtsblättern in den Datensätzen einer angewählten Datenart, der Druckauslösung und dem Freigeben der Datenkarten dienen.

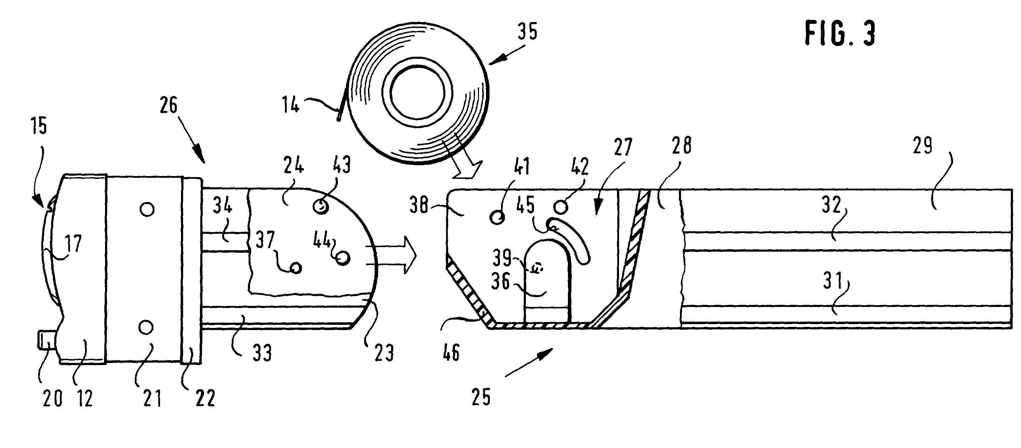

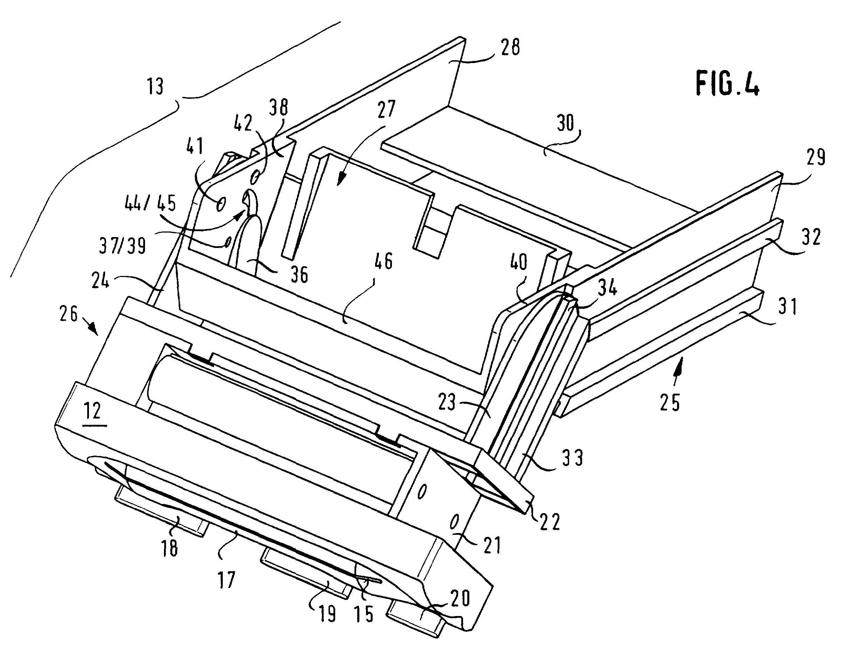

Wie aus der Figur 2 ersichtlich ist, sind das Frontwandelement 12 und ein Druckwerk 21 an einer Lagerbrücke 22 angeflanscht, die mittels an ihr angeformter Schenkel 23, 24 gelenkig mit einem Schlitten 25 der Druckerbaugruppe 13 verbunden und im folgenden als Fronteinheit 26 bezeichnet ist. Der Schlitten 25, der in den Seitenwänden des Fahrtschreibers 1 gegebenenfalls teleskopisch geführt ist, besteht aus einer wannenförmigen Aufnahme 27 (Figur 3) und Führungswangen 28 und 29, die in geeigneter Weise gegeneinander versteift sind. Ein diesem Zweck dienender Steg ist in Figur 4 mit 30 bezeichnet. An den Führungswangen 28, 29 angeformte Leisten 31, 32 dienen der Bildung von im einzelnen nicht bezeichneten, einander entgegengesetzten Führungsnuten, die mit an den Außenseiten der Schenkel 23, 24 der Lagerbrücke 22 ebenfalls durch angeformte Leisten 33, 34 gebildete Führungsnuten fluchten und die bei montierter Druckerbaugruppe 13 mit an den Seitenwänden des Fahrtschreibers 1 befestigten, C-förmig profilierten Führungsschienen in Eingriff stehen.

Gemäß den Figuren 3 und 4 wird ein in die Aufnahme 27 eingelegter Bandwickel 35 zwischen am Grund der Aufnahme 27 angeformte, gegebenenfalls federnde Finger, von denen einer sichtbar und mit 36 bezeichnet ist, gehaltert. Mit 37 ist ein am Schenkel 24 angeformter Lagerzapfen bezeichnet, dem in der Seitenwand 38 der Aufnahme 27 eine Lagerbohrung 39 zugeordnet ist. In gleicher Weise ist der Schenkel 23 der Lagerbrücke 22 in der Seitenwand 40 der Aufnahme 27 gelagert. In der Seitenwand 38 vorgesehene Öffnungen 41 und 42 oder lediglich Senkungen dienen im Zusammenwirken mit einem am Schenkel 24 angeformten Noppen 43 und den federungsfähig ausgebildeten Schenkeln 23, 24 als Rastelemente für die Grenzstellungen der Fronteinheit 26. Eine Stift-Schlitz-Verbindung 44, 45 ist als Überhubbegrenzung vorgesehen. Vorzugsweise werden zwischen den Schenkeln 23, 24 der Lagerbrücke 22 und den Seitenwänden 38, 40 der Aufname 27 die Abmessungen in Richtung der Drehachse der Fronteinheit 26 derart gestaltet, daß eine friktionelle Verbindung zwischen der Fronteinheit 26 und dem Schlitten 25 entsteht und somit beim Verschwenken der Fronteinheit 26 eine Bremswirkung gegeben ist.

Hervorgehoben sei an dieser Stelle, daß die frontseitige Stirnwand 46 des Schlittens 25 beziehungsweise der Aufnahme 27 verkürzt ausgebildet ist, so daß der Bandwickel 35 bei verschwenkter Fronteinheit 26 auch weitgehend von der Frontseite her einlegbar ist.

## Patentansprüche

1. Fahrtschreiber mit einem quaderförmigen Einbaugehäuse und mit einer Druckvorrichtung, in welcher ein bandförmiger Aufzeichnungsträger Anwendung findet, wobei zum Zwecke des Wechselns des DruckträgerBandwickels eine im wesentlichen aus einem Element der Frontwand des Fahrtschreibers, einem Druckwerk und einer Aufnahme für den Bandwickel bestehende, verschiebbar gelagerte Druckerbaugruppe vorgesehen ist, welche aus dem Fahrtschreiber frontseitig wenigstens teilweise herausfahrbar ist,
**dadurch gekennzeichnet,**
daß das Frontwandelement (12) und dem Druckwerk (21) der Druckerbaugruppe (13) gelenkig mit einem die wannenförmig geformte Aufnahme (27) umfassenden Schlitten verbunden ist.

2. Fahrtschreiber nach Anspruch 1,
**dadurch gekennzeichnet,**
daß eine Lagerbrücke (22) vorgesehen ist, an welcher das Druckwerk (21) und das Frontwandelement (12) befestigt sind und
daß die Schenkel (23, 24) der Lagerbrücke (22) in den Seitenwänden (38, 40) der Aufnahme (27) gelagert sind.

3. Fahrtschreiber nach Anspruch 2,
**dadurch gekennzeichnet,**
daß an den Schenkeln (23, 24) der Lagerbrücke (22) und an Führungswangen (28, 29) des Schlittens (25) miteinander fluchtende Führungsmittel (31, 32, 33, 34) ausgebildet sind.

4. Fahrtschreiber nach Anspruch 2,
**dadurch gekennzeichnet,**
daß an den Schenkeln jeweils ein nach innen weisender Noppen (43) und in den Seitenwänden (38, 40) der Aufnahme (27) jeweils wenigstens zwei den Noppen (43) zugeordnete Senkungen (41, 42) vorgesehen sind und
daß die Schenkel (23, 24) in Richtung der Lagerachse der Lagerbrücke (22) federungsfähig ausgebildet sind.

5. Fahrtschreiber nach Anspruch 1,
**dadurch gekennzeichnet,**
daß die Aufnahme (27) derart freigespart ist, daß nach dem Verschwenken der aus dem Frontwandelement (12) dem Druckwerk (21) und der Lagerbrücke (22) bestehenden Fronteinheit (26) das Einlegen eines Bandwickels (35) auch in Verschieberichtung der Druckerbaugruppe (13) erfolgen kann.

6. Fahrtschreiber nach Anspruch 2,
**dadurch gekennzeichnet,**
daß zur Lagerung der Fronteinheit (26) mehrere, konzentrisch zu einer geometrischen Achse in den Seitenwänden (38, 40) der Aufnahme (27) ausgebildete Schlitze und den Schlitzen zugeordnete in den Schenkeln (23, 24) angebrachte Zapfen vorgesehen sind.
